# EUROPEAN PATENT SPECIFICATION

(11) **EP 4 565 001 B1**
(45) Date of publication and mention of the grant of the patent: **23.09.2026**
(21) Application number: 24216319.4
(22) Date of filing: 28.11.2024
(51) Int. Cl.: H04W 84/18, H04W 88/16, H04W 40/24, H04W 84/12, H04L 12/66

(54) **LOCAL AREA NETWORK CONTROL SYSTEM BASED ON BLUETOOTH AND USER DATAGRAM PROTOCOL AND METHOD THEREOF**
STEUERSYSTEM FÜR EIN LOKALES NETZWERK AUF BASIS VON BLUETOOTH UND BENUTZERDATAGRAMMPROTOKOLL UND VERFAHREN DAFÜR
SYSTÈME DE COMMANDE DE RÉSEAU LOCAL BASÉ SUR BLUETOOTH ET PROTOCOLE DE DATAGRAMME UTILISATEUR ET PROCÉDÉ ASSOCIÉ

(30) Priority: 01.12.2023 CN 202311649029
(43) Date of publication of application: 04.06.2025
(73) Proprietor: Xiamen PVTECH Co., Ltd., Xiamen, Fujian 361101 (CN)
(72) Inventor: Lu, Fuxing, Xiamen (CN); Wu, Zhenhui, Xiamen (CN)
(74) Representative: Lang, Christian

(56) References cited:
- WO-A1-2023/011917
- US-A1- 2002 045 424
- US-A1- 2021 084 563

## Description

### TECHNICAL FIELD

The present invention relates to a local area network control system, in particular to a local area network control system based on Bluetooth and user datagram protocol (UDP). The present invention further relates to the method of the local area network control system.

### BACKGROUND

In a local area network (LAN) environment such as home, office, or science park, a user typically needs to control multiple devices, such as lighting, audio systems, televisions, etc. However, the user often needs to use different applications or remote controls to manage these devices, so the user should switch between various interfaces. This control method is not only highly inconvenient to use but also significantly inefficient.

To address this issue, centralized control solutions have emerged. These solutions can greatly enhance convenience and efficiency, allowing users to more easily control and manage various devices within a LAN in homes, offices, and similar settings. However, these centralized control solutions typically require cloud services, which substantially increase the costs associated with these solutions.

China Patent Publication No.: CN116074398A and China Patent Publication No. CN116266905A also disclose relevant techniques, but these techniques still fail to effectively solve the above problems. WO 2023/011917 A1 represents relevant prior art with respect to what is disclosed herewith.

### SUMMARY

The invention is defined in the appended claims.

One embodiment of the present invention provides a local area network control system based on Bluetooth and user datagram protocol (UDP), which includes a plurality of first Bluetooth devices, a first gateway, a plurality of second Bluetooth devices, a second gateway, and a control device. The first gateway manages the first Bluetooth devices. The second gateway manages the second Bluetooth devices. The first gateway broadcasts an information exchange request message based on UDP. The second gateway receives and analyzes the information exchange request message to obtain the gateway information of the first gateway, and return an information message based on UDP to the first gateway. The first gateway receives and analyzes the information message to obtain the gateway information of the second gateway. The control device controls one or more of the first Bluetooth devices and the second Bluetooth devices via either the first gateway or the second gateway.

In one embodiment, the gateway information of the first gateway includes the Internet address of the first gateway and the routing information of the first Bluetooth devices.

In one embodiment, the local area network control system further includes a second local database. The second gateway saves the routing information of the first Bluetooth devices in the second local database and returns the information message to the first gateway in unicast manner based on UDP according to the Internet address of the first gateway, such that the second gateway has the routing information of the first Bluetooth devices and the routing information of the second Bluetooth devices.

In one embodiment, the gateway information of the second gateway includes the Internet address of the second gateway and the routing information of the second Bluetooth devices.

In one embodiment, the local area network control system further includes a first local database. The first gateway saves the routing information of the second Bluetooth devices in the first local database and return a confirmation message to the second gateway in unicast manner based on UDP according to the Internet address of the second gateway, such that the first gateway has the routing information of the first Bluetooth devices and the routing information of the second Bluetooth devices.

Another embodiment of the present invention provides a local area network control method based on Bluetooth and UDP, which includes the following steps: broadcasting an information exchange request message based on UDP by a first gateway for managing a plurality of first Bluetooth devices; receiving and analyzing the information exchange request message by a second gateway for managing a plurality of second Bluetooth devices to obtain the gateway information of the first gateway, and returning an information message based on the user datagram protocol to the first gateway; receiving and analyzing the information message by the first gateway to obtain the gateway information of the second gateway; and controlling one or more of the first Bluetooth devices and the second Bluetooth devices by a control device via either the first gateway or the second gateway.

In one embodiment, the gateway information of the first gateway includes the Internet address of the first gateway and the routing information of the first Bluetooth devices.

In one embodiment, the step of receiving and analyzing the information exchange request message by the second gateway configured to manage the second Bluetooth devices to obtain the gateway information of the first gateway, and returning the information message based on the user datagram protocol to the first gateway further includes the following steps: saving the routing information of the first Bluetooth devices in a second local database via the second gateway; and returning the information message to the first gateway in unicast manner based on UDP according to the Internet address of the first gateway by the second gateway, such that the second gateway has the routing information of the first Bluetooth devices and the routing information of the second Bluetooth devices.

In one embodiment, the gateway information of the second gateway includes the Internet address of the second gateway and the routing information of the second Bluetooth devices.

In one embodiment, the method further includes the following steps: saving the routing information of the second Bluetooth devices in a first local database by the first gateway; and returning a confirmation message to the second gateway in unicast manner based on UDP according to the Internet address of the second gateway by the first gateway, such that the first gateway has the routing information of the first Bluetooth devices and the routing information of the second Bluetooth devices.

The local area network control system based on Bluetooth and UDP, and the method thereof in accordance with the embodiments of the present invention may have the following advantages:

(1) In one embodiment of the present invention, the local area network control system includes a plurality of first Bluetooth devices, a first gateway, a plurality of second Bluetooth devices, a second gateway, and a control device. The first gateway manages the first Bluetooth devices. The second gateway manages the second Bluetooth devices. The first gateway broadcasts an information exchange request message based on UDP. The second gateway receives and analyzes the information exchange request message to obtain the gateway information of the first gateway, and return an information message based on UDP to the first gateway. The first gateway receives and analyzes the information message to obtain the gateway information of the second gateway. The control device controls one or more of the first Bluetooth devices and the second Bluetooth devices via either the first gateway or the second gateway. Through this control mechanism, all gateways in the local area network can obtain the routing information for all Bluetooth devices within the local area network, such that the control device can control all Bluetooth devices in the local area network through any gateway. As a result, the control device achieves centralized control, so the system can be more convenient in use and of high efficiency.

(2) In one embodiment of the present invention, the local area network control system can effectively integrate Bluetooth mesh network and UDP, so the control device can control all Bluetooth devices in the local area network through any gateway without the need for cloud services, thereby achieving centralized control. This significantly reduces the cost of the local area network control system, such that the local area network control system can be more comprehensive in application in order to meet various needs.

(3) In one embodiment of the present invention, the local area network control system can effectively integrate Bluetooth mesh network and UDP, so the local area network control system can be more flexible in application and more convenient in management. Therefore, the local area network control system can conform to actual needs.

(4) **In** one embodiment of the present invention, the local area network control system can effectively integrate Bluetooth mesh networking and UDP, and provide a unique control mechanism. This enables the control device, when WiFi signals are strong, to obtain the routing information for all Bluetooth devices in the local area network based on UDP through any gateway, and when WiFi signals are weak, to obtain the routing information for all Bluetooth devices in the local area network based on the Bluetooth communication protocol through any gateway. In this way, the control device can control all Bluetooth devices in the local area network. Therefore, the local area network control system can achieve high practicality and reliability.

(5) In one embodiment of the present invention, the local area network control system effectively provides centralized control, meeting the needs of most users and supporting various intelligent applications. As a result, the local area network control system aligns with future development trends.

Further scope of applicability of the present application will become more apparent from the detailed description given hereinafter. However, it should be understood that the detailed description and specific examples, while indicating exemplary embodiments of the present invention, are given by way of illustration only.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is the schematic view of the local area network control method based on Bluetooth and user datagram protocol (UDP) in accordance with the first embodiment of the present invention.
FIG. 2 is the schematic view of the first operating state of the local area network control method based on Bluetooth and UDP in accordance with the first embodiment of the present invention.
FIG. 3 is the schematic view of the second operating state of the local area network control method based on Bluetooth and UDP in accordance with the first embodiment of the present invention.
FIG. 4 is the schematic view of the third operating state of the local area network control method based on Bluetooth and UDP in accordance with the first embodiment of the present invention.
FIG. 5 is the schematic view of the fourth operating state of the local area network control method based on Bluetooth and UDP in accordance with the first embodiment of the present invention.
FIG. 6 is the flow chart of the local area network control method based on Bluetooth and UDP in accordance with the second embodiment of the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

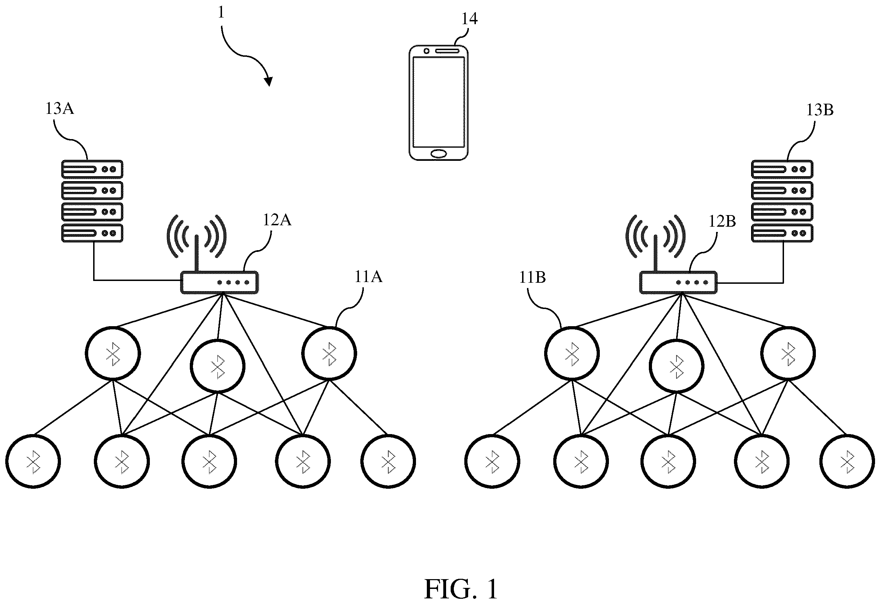

Please refer to FIG. 1, which is the schematic view of the local area network control method based on Bluetooth and user datagram protocol (UDP) in accordance with the first embodiment of the present invention. As shown in FIG. 1, the local area network control system 1 includes a plurality of first Bluetooth devices 11A, a first gateway 12A, a first local database 13A, a plurality of second Bluetooth devices 11B, a second gateway 12B, a second local database 13B, and a control device 14. The number of gateways and Bluetooth devices mentioned here is for illustration purposes and can be adjusted according to actual requirements. This invention is not limited to this specific configuration.

The first gateway 12A is a Bluetooth mesh network gateway that manages the first Bluetooth devices 11A. In one embodiment, these first Bluetooth devices 11A can include televisions, fans, sound systems, computers, lighting devices, or similar devices.

The first local database 13A is connected to the first gateway 12A. In one embodiment, the first local database 13A may be an SQLite database. In another embodiment, the first local database 13A may also be a MySQL database, a PostgreSQL database, or an H2 database.

The second gateway 12B is also a Bluetooth mesh network gateway that manages the second Bluetooth devices 11B. In one embodiment, these second Bluetooth devices 11B can include televisions, fans, sound systems, computers, lighting devices, or similar devices.

The second local database 13B is connected to the second gateway 12B. In one embodiment, the second local database 13B may be an SQLite database. In another embodiment, the second local database 13B may also be a MySQL database, a PostgreSQL database, or an H2 database.

The control device 14 can communicate with both the first gateway 12A and the second gateway 12B. In one embodiment, the control device 14 is a smartphone. In another embodiment, it may be a tablet computer, smartwatch, laptop, or other similar devices.

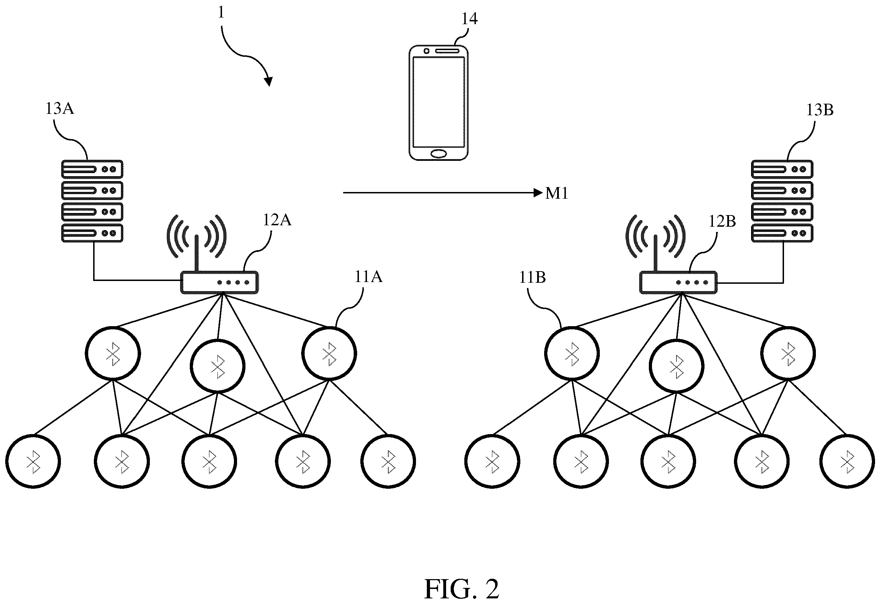

Please refer to FIG. 2, which is the schematic view of the first operating state of the local area network control method based on Bluetooth and UDP in accordance with the first embodiment of the present invention. As shown in FIG. 2, the first gateway 12A initially broadcasts an information exchange request message based on UDP. Since the first gateway 12A does not have information about other gateways in this local area network, the first gateway 12A needs to broadcast the information exchange request message M1 based on UDP. The information exchange request message M1 includes the gateway information of the first gateway 12A, which includes the Internet (IP) address of the first gateway 12A and the routing information (topology information) for the first Bluetooth devices 11A.

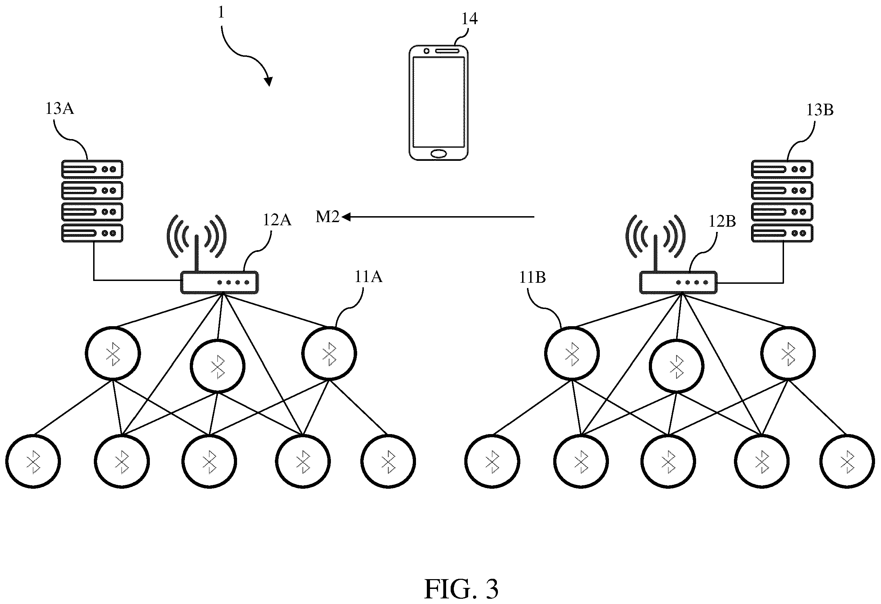

Please refer to FIG. 3, which is the schematic view of the second operating state of the local area network control method based on Bluetooth and UDP in accordance with the first embodiment of the present invention. As shown in FIG. 3, the second gateway 12B receives the information exchange request message M1 and analyzes which to obtain the gateway information of the first gateway 12A (including the Internet address of the first gateway 12A and the routing information of the first Bluetooth devices 11A). Then, the second gateway 12B saves the routing information of the first Bluetooth devices 11A in the first local database 13A. In this way, the second gateway 12B can acquire the routing information for all Bluetooth devices within the local area network (i.e., the first Bluetooth devices 11A and the second Bluetooth devices 11B). Next, the second gateway 12B returns an information message M2 to the first gateway 12A in unicast manner based on UDP according to the Internet address of the first gateway 12A. The information message M2 includes the gateway information of the second gateway 12B, which contains the Internet address of the second gateway 12B and the routing information (topology information) for the second Bluetooth devices 11B.

Since the second gateway 12B has already obtained the Internet address of the first gateway 12A, the second gateway 12B can directly return the information message M2 to the first gateway 12A in unicast manner based on UDP, thus reducing bandwidth usage in the local area network.

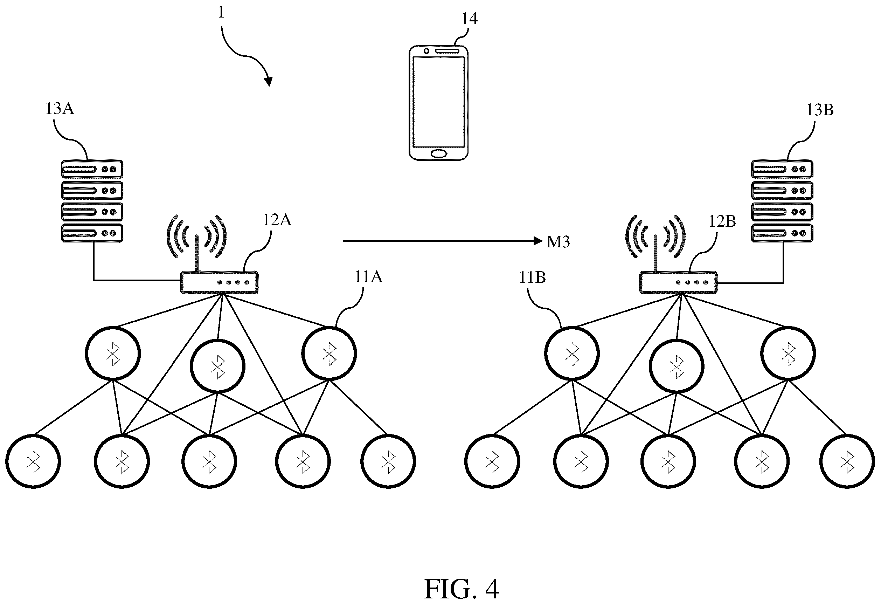

Please refer to FIG. 4, which is the schematic view of the third operating state of the local area network control method based on Bluetooth and UDP in accordance with the first embodiment of the present invention. As shown in FIG. 4, the first gateway 12A receives the information message M2 and analyze with to obtain the gateway information of the second gateway 12B (including the Internet address of the second gateway 12B and the routing information of the second Bluetooth devices 11B). Then, the first gateway 12A saves the routing information of the second Bluetooth devices 11B in the second local database 13B. In this way, the first gateway 12A can also obtain the routing information for all Bluetooth devices in the local area network (i.e., the first Bluetooth devices 11A and the second Bluetooth devices 11B). Next, the first gateway 12A returns a confirmation message M3 to the second gateway 12B in unicast manner based on UDP using the Internet address of the second gateway 12B.

Similarly, since the first gateway 12A has already obtained the Internet address of the second gateway 12B, the first gateway 12A can directly return the confirmation message M3 to the second gateway 12B in unicast manner based on UDP to reduce bandwidth usage in the local area network.

If the second gateway 12B does not receive the confirmation message M3 from the first gateway 12A, the second gateway 12B periodically sends information message M2 to the first gateway 12A in unicast manner based on UDP. Once the second gateway 12B receives the confirmation message M3 from the first gateway 12A, the second gateway 12B stops periodically sending information message M2.

Through this mechanism, any gateway within the local area network can obtain the routing information for all Bluetooth devices in the local area network. Consequently, the control device 14 can control all Bluetooth devices in the local area network via any gateway, achieving centralized control functionality.

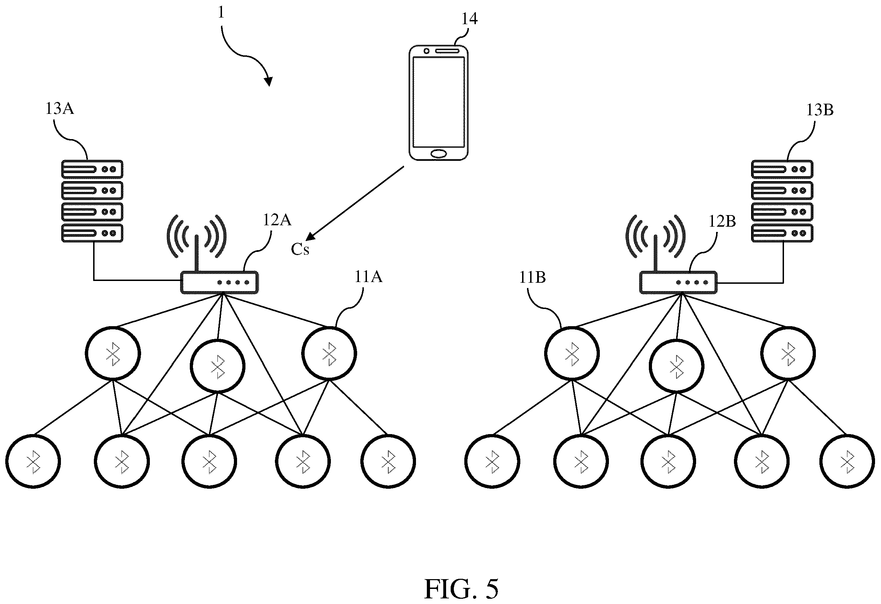

Please refer to FIG. 5, which is the schematic view of the fourth operating state of the local area network control method based on Bluetooth and UDP in accordance with the first embodiment of the present invention. As shown in FIG. 5, the control device 14 can send a control signal Cs to the first gateway 12A (or the second gateway 12B) to obtain the routing information for all Bluetooth devices in the local area network (i.e., the first Bluetooth devices 11A and the second Bluetooth devices 11B) and control any Bluetooth device in the local area network, achieving centralized control functionality.

If the WiFi signal is strong, the control device 14 sends the control signal Cs to the first gateway 12A (or the second gateway 12B) based on UDP. If the WiFi signal is weak, the control device 14 sends the control signal Cs to the first gateway 12A (or the second gateway 12B) based on Bluetooth communication protocol. In this way, the control device 14 can control all Bluetooth devices in the local area network, thus enhancing the practicality and reliability of the local area network control system 1.

If a third gateway, which manages a plurality of third Bluetooth devices (and connects to a third local database), is added to this local area network control system 1, the third gateway can perform the same operating mechanism as the first gateway 12A. For example, the third gateway broadcasts an information exchange request message based on UDP. This information exchange request message includes the gateway information of the third gateway, which includes the Internet address of the third gateway and the routing information (topology information) for the third Bluetooth devices.

The first gateway 12A then receives and analyzes this information exchange request message to obtain the gateway information of the third gateway (including the Internet address of the third gateway and the routing information for the third Bluetooth devices), and the first gateway 12A saves the routing information for the third Bluetooth devices in the first local database 13A. Similarly, the second gateway 12B receives and analyzes the information exchange request message to obtain the gateway information of the third gateway and saves the routing information for the third Bluetooth devices in the second local database 13B.

Since the first gateway 12A and the second gateway 12B have obtained the Internet address of the third gateway, the first gateway 12A and the second gateway 12B can directly return an information message to the third gateway in unicast manner based on UDP.

Next, the third gateway receives and analyzes the information message to obtain the gateway information of the first gateway 12A (including the Internet address of the first gateway 12A and routing information of the first Bluetooth devices 11A) and the gateway information of the second gateway 12B (including the Internet address of the second gateway 12B and routing information of the second Bluetooth devices 11B).

Finally, the third gateway saves the routing information of the first Bluetooth devices 11A and the second Bluetooth devices 11B in the third local database and returns confirmation messages to the first gateway 12A and the second gateway 12B.

Through the above mechanism, all gateways in the local area network can obtain the routing information for all Bluetooth devices in the local area network, enabling the control device 14 to control all Bluetooth devices in the local area network via any gateway. Therefore, the control device 14 achieves centralized control functionality, making operation more convenient and efficient.

Additionally, in this embodiment, the local area network control system 1 can effectively integrate the Bluetooth mesh network and UDP, such that the control device 14 can control all Bluetooth devices in the local area network through any gateway without requiring cloud services. This achieves centralized control functionality, significantly reducing the cost of the local area network control system 1 and making it more broadly applicable to various usage scenarios.

Furthermore, in this embodiment, the local area network control system 1 can effectively integrate the Bluetooth mesh network and UDP, offering greater flexibility in application and easier management. Therefore, the local area network control system 1 can meet practical application requirements.

It is worthy to point out that the currently available centralized control solutions typically require cloud services, which substantially increase the costs associated with these solutions. By contrast, according to one embodiment of the present invention, the local area network control system includes a plurality of first Bluetooth devices, a first gateway, a plurality of second Bluetooth devices, a second gateway, and a control device. The first gateway manages the first Bluetooth devices. The second gateway manages the second Bluetooth devices. The first gateway broadcasts an information exchange request message based on UDP. The second gateway receives and analyzes the information exchange request message to obtain the gateway information of the first gateway, and return an information message based on UDP to the first gateway. The first gateway receives and analyzes the information message to obtain the gateway information of the second gateway. The control device controls one or more of the first Bluetooth devices and the second Bluetooth devices via either the first gateway or the second gateway. Through this control mechanism, all gateways in the local area network can obtain the routing information for all Bluetooth devices within the local area network, such that the control device can control all Bluetooth devices in the local area network through any gateway. As a result, the control device achieves centralized control, so the system can be more convenient in use and of high efficiency.

Also, according to one embodiment of the present invention, the local area network control system can effectively integrate Bluetooth mesh network and UDP, so the control device can control all Bluetooth devices in the local area network through any gateway without the need for cloud services, thereby achieving centralized control. This significantly reduces the cost of the local area network control system, such that the local area network control system can be more comprehensive in application in order to meet various needs.

Further, according to one embodiment of the present invention, the local area network control system can effectively integrate Bluetooth mesh network and UDP, so the local area network control system can be more flexible in application and more convenient in management. Therefore, the local area network control system can conform to actual needs.

Moreover, according to one embodiment of the present invention, the local area network control system can effectively integrate Bluetooth mesh networking and UDP, and provide a unique control mechanism. This enables the control device, when WiFi signals are strong, to obtain the routing information for all Bluetooth devices in the local area network based on UDP through any gateway, and when WiFi signals are weak, to obtain the routing information for all Bluetooth devices in the local area network based on the Bluetooth communication protocol through any gateway. In this way, the control device can control all Bluetooth devices in the local area network. Therefore, the local area network control system can achieve high practicality and reliability.

Furthermore, according to one embodiment of the present invention, the local area network control system effectively provides centralized control, meeting the needs of most users and supporting various intelligent applications. As a result, the local area network control system aligns with future development trends. As described above, the local area network control system according to the embodiments can definitely achieve great technical effects.

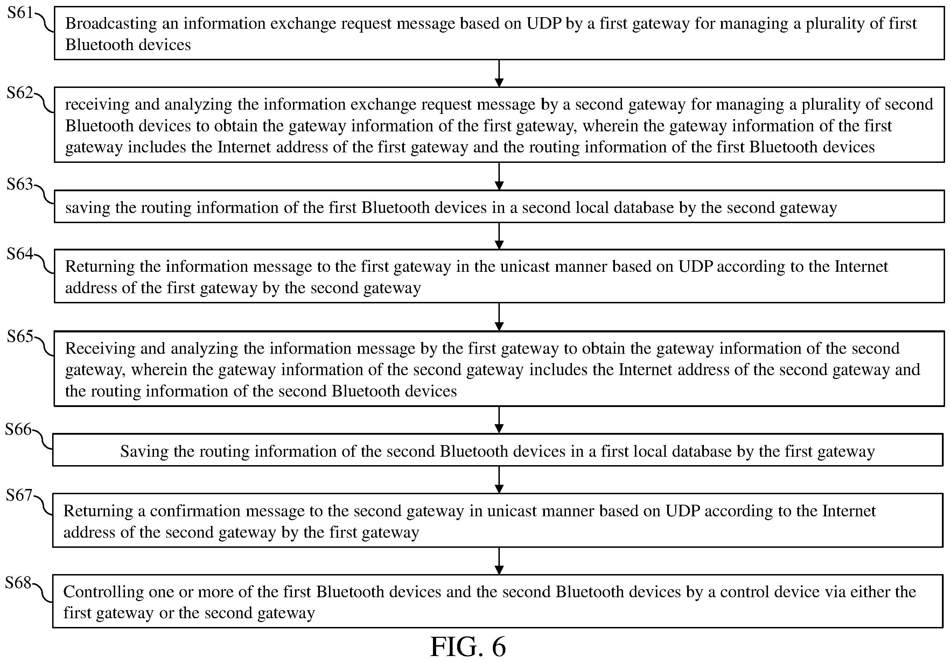

Please refer to FIG. 6, which is the flow chart of the local area network control method based on Bluetooth and UDP in accordance with the second embodiment of the present invention. As shown in FIG. 6, the local area network control method of the embodiment includes the following steps:

Step S61: broadcasting an information exchange request message based on UDP by a first gateway for managing a plurality of first Bluetooth devices.

Step S62: receiving and analyzing the information exchange request message by a second gateway for managing a plurality of second Bluetooth devices to obtain the gateway information of the first gateway, wherein the gateway information of the first gateway includes the Internet address of the first gateway and the routing information of the first Bluetooth devices.

Step S63: saving the routing information of the first Bluetooth devices in a second local database by the second gateway.

Step S64: returning the information message to the first gateway in the unicast manner based on UDP according to the Internet address of the first gateway by the second gateway.

Step S65: receiving and analyzing the information message by the first gateway to obtain the gateway information of the second gateway, wherein the gateway information of the second gateway includes the Internet address of the second gateway and the routing information of the second Bluetooth devices.

Step S66: saving the routing information of the second Bluetooth devices in a first local database by the first gateway.

Step S67: returning a confirmation message to the second gateway in unicast manner based on UDP according to the Internet address of the second gateway by the first gateway.

Step S68: controlling one or more of the first Bluetooth devices and the second Bluetooth devices by a control device via either the first gateway or the second gateway.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

To sum up, according to one embodiment of the present invention, the local area network control system includes a plurality of first Bluetooth devices, a first gateway, a plurality of second Bluetooth devices, a second gateway, and a control device. The first gateway manages the first Bluetooth devices. The second gateway manages the second Bluetooth devices. The first gateway broadcasts an information exchange request message based on UDP. The second gateway receives and analyzes the information exchange request message to obtain the gateway information of the first gateway, and return an information message based on UDP to the first gateway. The first gateway receives and analyzes the information message to obtain the gateway information of the second gateway. The control device controls one or more of the first Bluetooth devices and the second Bluetooth devices via either the first gateway or the second gateway. Through this control mechanism, all gateways in the local area network can obtain the routing information for all Bluetooth devices within the local area network, such that the control device can control all Bluetooth devices in the local area network through any gateway. As a result, the control device achieves centralized control, so the system can be more convenient in use and of high efficiency.

Also, according to one embodiment of the present invention, the local area network control system can effectively integrate Bluetooth mesh network and UDP, so the control device can control all Bluetooth devices in the local area network through any gateway without the need for cloud services, thereby achieving centralized control. This significantly reduces the cost of the local area network control system, such that the local area network control system can be more comprehensive in application in order to meet various needs.

Further, according to one embodiment of the present invention, the local area network control system can effectively integrate Bluetooth mesh network and UDP, so the local area network control system can be more flexible in application and more convenient in management. Therefore, the local area network control system can conform to actual needs.

Moreover, according to one embodiment of the present invention, the local area network control system can effectively integrate Bluetooth mesh networking and UDP, and provide a unique control mechanism. This enables the control device, when WiFi signals are strong, to obtain the routing information for all Bluetooth devices in the local area network based on UDP through any gateway, and when WiFi signals are weak, to obtain the routing information for all Bluetooth devices in the local area network based on the Bluetooth communication protocol through any gateway. In this way, the control device can control all Bluetooth devices in the local area network. Therefore, the local area network control system can achieve high practicality and reliability.

Furthermore, according to one embodiment of the present invention, the local area network control system effectively provides centralized control, meeting the needs of most users and supporting various intelligent applications. As a result, the local area network control system aligns with future development trends.

## Claims

1. A local area network control system (1) based on Bluetooth and user datagram protocol, comprising:
a plurality of first Bluetooth devices (11A);
a first gateway (12A) configured to manage the first Bluetooth devices (11A);
a plurality of second Bluetooth devices (11B);
a second gateway (12B) configured to manage the second Bluetooth devices (11B); and
a control device (14);
wherein the first gateway (12A) is configured to broadcast an information exchange request message (M1) based on a user datagram protocol,
the system **characterized in that** the second
gateway (12B) is configured to receive and analyze the information exchange request message (M1) to obtain a gateway information of the first gateway (12A), and return an information message (M2) based on the user datagram protocol to the first gateway (12A), wherein the first gateway (12A) is configured to receive and analyze the information message (M2) to obtain a gateway information of the second gateway (12B), and the control device (14) is configured to control one or more of the first Bluetooth devices (11A) and the second Bluetooth devices (11B) via either the first gateway (12A) or the second gateway (12B).

2. The local area network control system (1) based on Bluetooth and user datagram protocol as claimed in claim 1, **characterized in that** the gateway information of the first gateway (12A) comprises an Internet address of the first gateway (12A) and a routing information of the first Bluetooth devices (11A).

3. The local area network control system (1) based on Bluetooth and user datagram protocol as claimed in claim 2, **characterized by** further comprising a second local database (13B), wherein the second gateway (12B) is configured to save the routing information of the first Bluetooth devices (11A) in the second local database (13B) and return the information message (M2) to the first gateway (12A) in a unicast manner based on the user datagram protocol according to the Internet address of the first gateway (12A), whereby the second gateway (12B) has the routing information of the first Bluetooth devices (11A) and a routing information of the second Bluetooth devices (11B).

4. The local area network control system based on Bluetooth and user datagram protocol as claimed in claim 1, **characterized in that** the gateway information of the second gateway (12B) comprises an Internet address of the second gateway (12B) and a routing information of the second Bluetooth devices (11B).

5. The local area network control system based on Bluetooth and user datagram protocol as claimed in claim 4, **characterized by** further comprising a first local database (13A), wherein the first gateway (12A) is configured to save the routing information of the second Bluetooth devices (12B) in the first local database (13A) and return a confirmation message (M3) to the second gateway (12B) in a unicast manner based on the user datagram protocol according to the Internet address of the second gateway (12B), whereby the first gateway (12A) has the routing information of the first Bluetooth devices (11A) and the routing information of the second Bluetooth devices (11B).

6. A local area network control method based on Bluetooth and user datagram protocol,
the method comprising the steps:
broadcasting an information exchange request message (M1) based on a user datagram protocol by a first gateway (12A) configured to manage a plurality of first Bluetooth devices (11A);
the method **characterized in that** it further comprises:
receiving and analyzing the information exchange request message (M1) by a second gateway (12B) configured to manage a plurality of second Bluetooth devices (11B) to obtain a gateway information of the first gateway (11A), and returning an information message (M2) based on the user datagram protocol to the first gateway (12A);
receiving and analyzing the information message (M2) by the first gateway (12A) to obtain a gateway information of the second gateway (12B); and
controlling one or more of the first Bluetooth devices (11A) and the second Bluetooth devices (11B) by a control device (14) via either the first gateway (12A) or the second gateway (12B).

7. The local area network control method based on Bluetooth and user datagram protocol as claimed in claim 6, **characterized in that** the gateway information of the first gateway (12A) comprises an Internet address of the first gateway (12A) and a routing information of the first Bluetooth devices (11A).

8. The local area network control method based on Bluetooth and user datagram protocol as claimed in claim 7, **characterized in that** a step of receiving and analyzing the information exchange request message (M1) by the second gateway (12B) configured to manage the second Bluetooth devices (11B) to obtain the gateway information of the first gateway (12A), and returning the information message (M2) based on the user datagram protocol to the first gateway (12A) further comprises:
saving the routing information of the first Bluetooth devices (11A) in a second local database (13B) via the second gateway; and
returning the information message (M2) to the first gateway (12A) in a unicast manner based on the user datagram protocol according to the Internet address of the first gateway (12A) by the second gateway (12B), whereby the second gateway (12B) has the routing information of the first Bluetooth devices (11A) and a routing information of the second Bluetooth devices (11B).

9. The local area network control method based on Bluetooth and user datagram protocol as claimed in claim 6, **characterized in that** the gateway information of the second gateway (12B) comprises an Internet address of the second gateway (12B) and a routing information of the second Bluetooth devices (11B).

10. The local area network control method based on Bluetooth and user datagram protocol as claimed in claim 9, **characterized by** further comprising:
saving the routing information of the second Bluetooth devices (11B) in a first local database (13A) by the first gateway (12A); and
returning a confirmation message (M3) to the second gateway (12B) in a unicast manner based on the user datagram protocol according to the Internet address of the second gateway (12B) by the first gateway (12A), whereby the first gateway (12A) has the routing information of the first Bluetooth devices (11A) and the routing information of the second Bluetooth devices (11B).

## Patentansprüche

1. Steuerungssystem (1) für ein lokales Netzwerk auf Basis von Bluetooth und Benutzerdatagrammprotokoll, welches umfasst:
eine Vielzahl von ersten Bluetooth-Vorrichtungen (11A);
ein erstes Gateway (12A), das zur Verwaltung der ersten Bluetooth-Vorrichtungen (11A) konfiguriert ist;
eine Vielzahl von zweiten Bluetooth-Vorrichtungen (11B);
ein zweites Gateway (12B), das zur Verwaltung der zweiten Bluetooth-Vorrichtungen (11B) konfiguriert ist; und
eine Steuervorrichtung (14);
wobei das erste Gateway (12A) zur Übertragung einer Informationsaustauschanfragemeldung (M1) basierend auf einem Benutzerdatagrammprotokoll konfiguriert ist,
wobei das System **dadurch gekennzeichnet ist, dass** das zweite Gateway (12B) so konfiguriert ist, dass es die Informationsaustauschanfragemeldung (M1) empfängt und analysiert, um eine Gateway-Information des ersten Gateways (12A) zu erhalten, und eine Informationsmeldung (M2) basierend auf dem Benutzerdatagrammprotokoll an das erste Gateway (12A) zurücksendet, wobei das erste Gateway (12A) so konfiguriert ist, dass es die Informationsmeldung (M2) empfängt und analysiert, um eine Gateway-Information des zweiten Gateways (12B) zu erhalten, und wobei die Steuervorrichtung (14) konfiguriert ist, um eine oder mehrere der ersten Bluetooth-Vorrichtungen (11A) und der zweiten Bluetooth-Vorrichtungen (11B) über entweder das erste Gateway (12A) oder das zweite Gateway (12B) zu steuern.

2. Steuerungssystem (1) für ein lokales Netzwerk auf Basis von Bluetooth und Benutzerdatagrammprotokoll nach Anspruch 1, **dadurch gekennzeichnet, dass** die Gateway-Information des ersten Gateways (12A) eine Internetadresse des ersten Gateways (12A) und eine Routing-Information der ersten Bluetooth-Vorrichtungen (11A) umfasst.

3. Steuerungssystem (1) für ein lokales Netzwerk auf Basis von Bluetooth und Benutzerdatagrammprotokoll nach Anspruch 2, **dadurch gekennzeichnet, dass** es ferner eine zweite lokale Datenbank (13B) umfasst, wobei das zweite Gateway (12B) konfiguriert ist, um die Routing-Information der ersten Bluetooth-Vorrichtungen (11A) in der zweiten lokalen Datenbank (13B) zu speichern, und die Informationsmeldung (M2) in einer Unicast-Weise basierend auf dem Benutzerdatagrammprotokoll gemäß der Internetadresse des ersten Gateways (12A) an das erste Gateway (12A) zurücksendet, wodurch das zweite Gateway (12B) die Routing-Information der ersten Bluetooth-Vorrichtungen (11A) und eine Routing-Information der zweiten Bluetooth-Vorrichtungen (11B) hat.

4. Steuerungssystem für ein lokales Netzwerk auf Basis von Bluetooth und Benutzerdatagrammprotokoll nach Anspruch 1, **dadurch gekennzeichnet, dass** die Gateway-Information des zweiten Gateways (12B) eine Internetadresse des zweiten Gateways (12B) und eine Routing-Information der zweiten Bluetooth-Vorrichtungen (11B) umfasst.

5. Steuerungssystem für ein lokales Netzwerk auf Basis von Bluetooth und Benutzerdatagrammprotokoll nach Anspruch 4, **dadurch gekennzeichnet, dass** dieses ferner eine erste lokale Datenbank (13A) umfasst, wobei das erste Gateway (12A) konfiguriert ist, um die Routing-Information der zweiten Bluetooth-Vorrichtungen (12B) in der ersten lokalen Datenbank (13A) zu speichern und eine Bestätigungsmeldung (M3) in einer Unicast-Weise basierend auf dem Benutzerdatagrammprotokoll gemäß der Internetadresse des zweiten Gateways (12B) an das zweite Gateway (12B) zurücksendet, wodurch das erste Gateway (12A) die Routing-Information der ersten Bluetooth-Vorrichtungen (11A) und die Routing-Information der zweiten Bluetooth-Vorrichtungen (11B) hat.

6. Steuerungsverfahren für ein lokales Netzwerk auf Basis von Bluetooth und Benutzerdatagrammprotokoll, wobei das Verfahren die Schritte umfasst:
Übertragen einer Informationsaustauschanfragemeldung (M1) basierend auf einem Benutzerdatagrammprotokoll durch ein erstes Gateway (12A), das zur Verwaltung einer Vielzahl von ersten Bluetooth-Vorrichtungen (11A) konfiguriert ist;
wobei das Verfahren **dadurch gekennzeichnet ist, dass** es ferner umfasst:
Empfangen und Analysieren der Informationsaustauschanfragemeldung (M1) durch ein zweites Gateway (12B), das zur Verwaltung einer Vielzahl von zweiten Bluetooth-Vorrichtungen (11B) konfiguriert ist, um eine Gateway-Information des ersten Gateways (11A) zu erhalten, und Zurücksenden einer Informationsmeldung (M2) basierend auf dem Benutzerdatagrammprotokoll an das erste Gateway (12A);
Empfangen und Analysieren der Informationsmeldung (M2) durch das erste Gateway (12A), um eine Gateway-Information des zweiten Gateways (12B) zu erhalten; und
Steuerung von einer oder mehrerer der ersten Bluetooth-Vorrichtungen (11A) und der zweiten Bluetooth-Vorrichtungen (11B) durch eine Steuervorrichtung (14) über entweder das erste Gateway (12A) oder das zweite Gateway (12B).

7. Steuerungsverfahren für ein lokales Netzwerk auf Basis von Bluetooth und Benutzerdatagrammprotokoll nach Anspruch 6, **dadurch gekennzeichnet, dass** die Gateway-Information des ersten Gateways (12A) eine Internetadresse des ersten Gateways (12A) und eine Routing-Information der ersten Bluetooth-Vorrichtungen (11A) umfasst.

8. Steuerungsverfahren für ein lokales Netzwerk auf Basis von Bluetooth und Benutzerdatagrammprotokoll nach Anspruch 7, **dadurch gekennzeichnet, dass** ein Schritt zum Empfangen und Analysieren der Informationsaustauschanfragemeldung (M1) durch das zweite Gateway (12B), das zur Verwaltung der zweiten Bluetooth-Vorrichtungen (11B) konfiguriert ist, um die Gateway-Information des ersten Gateways (11A) zu erhalten, und die Informationsmeldung (M2) basierend auf dem Benutzerdatagrammprotokoll an das erste Gateway (12A) zurücksendet, ferner umfasst:
Speichern der Routing-Information der ersten Bluetooth-Vorrichtungen (11A) in einer zweiten lokalen Datenbank (13B) durch das zweite Gateway; und
Zurücksenden der Informationsmeldung (M2) an das erste Gateway (12A) in einer Unicast-Weise basierend auf dem Benutzerdatagrammprotokoll gemäß der Internetadresse des ersten Gateways (12A) durch das zweite Gateway (12B), wodurch das zweite Gateway (12B) die Routing-Information der ersten Bluetooth-Vorrichtungen (11A) und eine Routing-Information der zweiten Bluetooth-Vorrichtungen (11B) hat.

9. Steuerungsverfahren für ein lokales Netzwerk auf Basis von Bluetooth und Benutzerdatagrammprotokoll nach Anspruch 6, **dadurch gekennzeichnet, dass** die Gateway-Information des zweiten Gateways (12B) eine Internetadresse des zweiten Gateways (12B) und eine Routing-Information der zweiten Bluetooth-Vorrichtungen (11B) umfasst.

10. Steuerungsverfahren für ein lokales Netzwerk auf Basis von Bluetooth und Benutzerdatagrammprotokoll nach Anspruch 9, **dadurch gekennzeichnet, dass** dieses ferner umfasst:
Speichern der Routing-Information der zweiten Bluetooth-Vorrichtungen (11B) in einer ersten lokalen Datenbank (13A) durch das erste Gateway (12A); und
Zurücksenden einer Bestätigungsmeldung (M3) an das zweite Gateway (12B) in einer Unicast-Weise basierend auf dem Benutzerdatagrammprotokoll gemäß der Internetadresse des zweiten Gateways (12B) durch das erste Gateway (12A), wodurch das erste Gateway (12A) die Routing-Information der ersten Bluetooth-Vorrichtungen (11A) und die Routing-Information der zweiten Bluetooth-Vorrichtungen (11B) hat.

## Revendications

1. Système de commande de réseau local (1) basé sur Bluetooth et le protocole de datagramme utilisateur, comprenant :
une pluralité de premiers dispositifs Bluetooth (11A) ;
une première passerelle (12A) configurée pour gérer les premiers dispositifs Bluetooth (11A) ;
une pluralité de seconds dispositifs Bluetooth (11B) ;
une seconde passerelle (12B) configurée pour gérer les seconds dispositifs Bluetooth (11B) ; et
un dispositif de commande (14) ;
dans lequel la première passerelle (12A) est configurée pour diffuser un message de demande d'échange d'informations (M1) basé sur un protocole de datagramme utilisateur,
le système est **caractérisé en ce que** la seconde passerelle (12B) est configurée pour recevoir et analyser le message de demande d'échange d'informations (M1) afin d'obtenir des informations de passerelle de la première passerelle (12A), et renvoyer un message d'informations (M2) basé sur le protocole de datagramme utilisateur à la première passerelle (12A), dans lequel la première passerelle (12A) est configurée pour recevoir et analyser le message d'informations (M2) afin d'obtenir des informations de passerelle de la seconde passerelle (12B), et le dispositif de commande (14) est configuré pour commander un ou plusieurs des premiers dispositifs Bluetooth (11A) et des seconds dispositifs Bluetooth (11B) via soit la première passerelle (12A), soit la seconde passerelle (12B).

2. Système de commande de réseau local (1) basé sur Bluetooth et le protocole de datagramme utilisateur selon la revendication 1, **caractérisé en ce que** les informations de passerelle de la première passerelle (12A) comprennent une adresse Internet de la première passerelle (12A) et des informations de routage des premiers dispositifs Bluetooth (11A).

3. Système de commande de réseau local (1) basé sur Bluetooth et le protocole de datagramme utilisateur selon la revendication 2, **caractérisé en ce qu'**il comprend en outre une seconde base de données locale (13B), dans lequel la seconde passerelle (12B) est configurée pour enregistrer les informations de routage des premiers dispositifs Bluetooth (11A) dans la seconde base de données locale (13B) et renvoyer le message d'informations (M2) à la première passerelle (12A) de manière unicast basée sur le protocole de datagramme utilisateur selon l'adresse Internet de la première passerelle (12A), selon lequel la seconde passerelle (12B) dispose des informations de routage des premiers dispositifs Bluetooth (11A) et des informations de routage des seconds dispositifs Bluetooth (11B).

4. Système de commande de réseau local basé sur Bluetooth et le protocole de datagramme utilisateur selon la revendication 1, **caractérisé en ce que** les informations de passerelle de la seconde passerelle (12B) comprennent une adresse Internet de la seconde passerelle (12B) et des informations de routage des seconds dispositifs Bluetooth (11B).

5. Système de commande de réseau local basé sur Bluetooth et le protocole de datagramme utilisateur selon la revendication 4, **caractérisé en ce qu'**il comprend en outre une première base de données locale (13A), dans lequel la première passerelle (12A) est configurée pour enregistrer les informations de routage des seconds dispositifs Bluetooth (12B) dans la première base de données locale (13A) et renvoyer un message de confirmation (M3) à la seconde passerelle (12B) de manière unicast basée sur le protocole de datagramme utilisateur selon l'adresse Internet de la seconde passerelle (12B), selon lequel la première passerelle (12A) dispose des informations de routage des premiers dispositifs Bluetooth (11A) et des informations de routage des seconds dispositifs Bluetooth (11B).

6. Procédé de commande de réseau local basé sur Bluetooth et le protocole de datagramme utilisateur, le procédé comprenant les étapes :
la diffusion d'un message de demande d'échange d'informations (M1) basé sur un protocole de datagramme utilisateur par une première passerelle (12A) configurée pour gérer une pluralité de premiers dispositifs Bluetooth (11A) ;
le procédé étant **caractérisé en ce qu'**il comprend en outre :
la réception et l'analyse du message de demande d'échange d'informations (M1) par une seconde passerelle (12B) configurée pour gérer une pluralité de seconds dispositifs Bluetooth (11B) afin d'obtenir des informations de passerelle de la première passerelle (11A), et le retour d'un message d'informations (M2) basé sur le protocole de datagramme utilisateur à la première passerelle (12A) ;
la réception et l'analyse du message d'informations (M2) par la première passerelle (12A) pour obtenir des informations de passerelle de la seconde passerelle (12B) ; et
la commande d'un ou plusieurs des premiers dispositifs Bluetooth (11A) et des seconds dispositifs Bluetooth (11B) par un dispositif de commande (14) via la première passerelle (12A) ou la seconde passerelle (12B).

7. Procédé de commande de réseau local basé sur Bluetooth et le protocole de datagramme utilisateur selon la revendication 6, **caractérisé en ce que** les informations de passerelle de la première passerelle (12A) comprennent une adresse Internet de la première passerelle (12A) et des informations de routage des premiers dispositifs Bluetooth (11A).

8. Procédé de commande de réseau local basé sur Bluetooth et le protocole de datagramme utilisateur selon la revendication 7, **caractérisé en ce qu'**une étape de réception et d'analyse du message de demande d'échange d'informations (M1) par la seconde passerelle (12B) configurée pour gérer les seconds dispositifs Bluetooth (11B) afin d'obtenir les informations de passerelle de la première passerelle (12A), et de renvoi du message d'informations (M2) basé sur le protocole de datagramme utilisateur à la première passerelle (12A), comprend en outre :
l'enregistrement des informations de routage des premiers dispositifs Bluetooth (11A) dans une seconde base de données locale (13B) via la seconde passerelle ; et
le retour du message d'informations (M2) à la première passerelle (12A) de manière unicast basée sur le protocole de datagramme utilisateur selon l'adresse Internet de la première passerelle (12A) par la seconde passerelle (12B), selon lequel la seconde passerelle (12B) dispose des informations de routage du premier dispositif Bluetooth (11A) et des informations de routage du deuxième dispositif Bluetooth (11B).

9. Procédé de commande de réseau local basé sur Bluetooth et le protocole de datagramme utilisateur selon la revendication 6, **caractérisé en ce que** les informations de passerelle de la seconde passerelle (12B) comprennent une adresse Internet de la seconde passerelle (12B) et des informations de routage des seconds dispositifs Bluetooth (11B).

10. Procédé de commande de réseau local basé sur Bluetooth et le protocole de datagramme utilisateur selon la revendication 9, **caractérisé en ce qu'**il comprend en outre :
l'enregistrement des informations de routage des seconds dispositifs Bluetooth (11B) dans une première base de données locale (13A) par la première passerelle (12A) ; et
le retour d'un message de confirmation (M3) à la seconde passerelle (12B) de manière unicast basée sur le protocole de datagramme utilisateur selon l'adresse Internet de la seconde passerelle (12B) par la première passerelle (12A), selon lequel la première passerelle (12A) dispose des informations de routage du premier dispositif Bluetooth (11A) et des informations de routage du deuxième dispositif Bluetooth (11B).
